# EUROPEAN PATENT SPECIFICATION

(11) **EP 4 321 943 B1**
(45) Date of publication and mention of the grant of the patent: **23.07.2025**
(21) Application number: 22784837.1
(22) Date of filing: 28.03.2022
(51) Int. Cl.: G06F 1/16, G06F 3/0362, G04G 9/00, G04G 17/00, G04G 17/04, G04G 17/08, G04G 21/00, G04G 21/04, G04G 21/08, G04G 99/00, G04B 19/28, G04R 60/00

(54) **ELECTRONIC DEVICE COMPRISING ROTATABLE MEMBER**
ELEKTRONISCHE VORRICHTUNG MIT DREHBAREM ELEMENT
DISPOSITIF ÉLECTRONIQUE COMPRENANT UN ÉLÉMENT ROTATIF

(30) Priority: 07.04.2021 KR 20210045481
(43) Date of publication of application: 14.02.2024
(73) Proprietor: Samsung Electronics Co., Ltd., Suwon-si, Gyeonggi-do 16677 (KR)
(72) Inventor: LEE, Jongmin, Suwon-si Gyeonggi-do 16677 (KR); JUN, Sungsoo, Suwon-si Gyeonggi-do 16677 (KR); JEONG, Wooyoung, Suwon-si Gyeonggi-do 16677 (KR); PARK, Changho, Suwon-si Gyeonggi-do 16677 (KR); LEE, Soyoung, Suwon-si Gyeonggi-do 16677 (KR)
(74) Representative: Nederlandsch Octrooibureau
(86) International application number: PCT/KR2022/004359
(87) International publication number: WO 2022/215927

(56) References cited:
- EP-B1- 1 909 148
- JP-A- 2004 227 922
- KR-A- 20160 083 690
- KR-A- 20170 059 924
- KR-A- 20200 042 834
- KR-A- 20200 085 484
- US-A1- 2015 253 980
- US-A1- 2017 093 451
- US-A1- 2018 067 639

## Description

### [Technical Field]

Various embodiments of the disclosure relate to an electronic device and, specifically, to a rotatable member and an electronic device including same.

### [Background Art]

In general, an electronic device implies a device which performs a specific function according to a loaded program, such as a home appliance, an electronic notebook, a portable multimedia player, a mobile communication terminal, a tablet PC, a video/audio device, a desktop/laptop computer, and a car navigation system.

For example, these electronic devices may output stored information as sound or image. As the degree of integration of electronic devices increases and ultra-high-speed and high-capacity wireless communication becomes common, recently, a single mobile communication terminal is equipped with various functions. For example, not only communication functions, but also entertainment functions such as games, multimedia functions such as music/video playback, communication and security functions for mobile banking, and functions such as schedule management and electronic wallets are integrated into one electronic device.

In addition, as recent electronic devices, wearable electronic devices having various shapes such as glasses or watches which may be used by being worn on a human body have been proposed.

Such electronic devices may require thinning, miniaturization, and/or simplification of appearance so as to integrate various functions, increase aesthetics, and provide convenience to users.

According to this demand, as a method for enabling users to conveniently interface various functions of electronic devices, electronic devices to which various types of wheel bezel structures (e.g., capable of being named as wheel bezels or wheel structures) are applied are being proposed. Patent document JP 2004 227922 A, published on 12 August 2004, discloses a first bezel and a first switch group capable of selection by depressing the position of the first bezel, which are arranged in the upper face direction, and a second bezel and a second switch group capable of selection by depressing the position of the second bezel, which are arranged in the side face direction, thereby, the number of switches that are capable of direct selection by depressing the position of the bezels is the sum of the number of the switches of the first switch group and the number of the switches of the second switch group. Patent document US 2017/093451 A1, published on 30 March 2017, discloses a wearable device for information delivery comprising a physiological sensor, a microprocessor, a display and a wearable housing. Patent document US 2015/253980 A1, published on 10 September 2015, discloses an information processing method including obtaining by the first sensor a first movement input of a first operating body located on the side of the frame structural body and a second movement input of a second operating body located on the side of the frame structural body; determining whether the first movement input and the second movement input satisfy a predetermined condition. Patent document US 2018/067639 A1, published on 8 March 2018, discloses content on a display user interface of an electronic device, such as a wearable electronic device, which can be manipulated using capacitive touch sensors that may be seamlessly integrated into the housing or strap of the electronic device. Patent document EP 1 909 148 B1, published on 30 May 2012, discloses a device having an rotary ring including rigid elements (3, 20) i.e. plates, that are connected together and distributed in two series, where the two series of elements are provided in contact with respective guiding walls (4, 5).

### [Detailed Description of the Invention]

### [Technical Problem]

In a case of a wheel bezel structure provided to an electronic device, the wheel bezel structure may be rotatably provided in a housing of the electronic device, and a user may turn on/off power of the electronic device while rotating the wheel bezel structure. In addition, by executing an electronic device in a sleep mode state in which only the power is turned on, or a command may be input to the electronic device in a driving mode by executing the function of the electronic device. Various functions of the electronic device may be selectively implemented using the wheel bezel structure. The wheel bezel structure may be provided to rotate 360 degrees while facing one surface of the housing of the electronic device. In general, the wheel bezel structure may be made of metal or plastic, and may be formed in an approximate "O" shape, so that an electronic device having a body which may be assembled with the wheel bezel structure (e.g., circle) may be used.

In a case of an electronic device having a non-circular body, it may be difficult to apply the wheel bezel structure. Therefore, when the electronic device has a non-circular body, in general, a method of inputting by turning a crown (e.g., stem) provided on a side surface of the electronic device, touching a display screen with a built-in touch panel, or using other key input devices (e.g., buttons) may be used. For example, to move a screen of an electronic device or execute an application, a user may turn a crown with a finger, touch a screen, or press a key input device (e.g., a button). However, the crown provided on the side of the electronic device may be formed in a small size due to the arrangement structure, and it may be inconvenient for a user to control the crown with a finger. In addition, when it is difficult to touch the screen, such as when the user wears gloves, input to the electronic device may not be smooth. When a key input device (e.g., a button) is pressed, it is possible to activate a specific function, but it may be difficult to support an operation such as moving a screen of the electronic device.

According to various embodiments of the disclosure, with respect to an electronic device having a non-circular perimeter, an electronic device including a wheel bezel structure rotatable along the perimeter is provided.

### [Technical Solution]

According to various embodiments of the disclosure, an electronic device is provided according to claim 1. Further embodiments are recited in the dependent claims.

### [Advantageous Effects]

According to various embodiments, by providing an electronic device including a wheel bezel structure rotatable along a non-circular perimeter, there is an advantage in that various inputs to the electronic device are possible using the wheel bezel structure.

According to various embodiments, there is an advantage in that various inputs to an electronic device are possible using the wheel bezel structure even when a user wears gloves.

### [Brief Description of Drawings]

FIG. 1 is a block diagram of an electronic device in a network environment, according to various embodiments of the disclosure;
FIG. 2A is a perspective view of a front surface of an electronic device, according to an embodiment;
FIG. 2B is a perspective view of a rear surface of the electronic device of FIG. 2A;
FIG. 3 is an exploded perspective view of the electronic device of FIG. 2A;
FIG. 4 is a perspective view showing an upper surface of an electronic device, according to various embodiments of the disclosure;
FIG. 5 is a front view showing how a wheel bezel structure is coupled to an electronic device, according to various embodiments of the disclosure;
FIG. 6 is a perspective view showing how a wheel bezel structure and a side surface member are coupled to each other, according to various embodiments of the disclosure;
FIG. 7 is a perspective view showing a wheel bezel structure, according to various embodiments of the disclosure;
FIG. 8 is a perspective view showing a bezel piece, according to various embodiments of the disclosure;
FIG. 9 is a perspective view showing how a plurality of bezel pieces of a wheel bezel structure are coupled to each other, according to various embodiments of the disclosure;
FIG. 10 is a perspective view showing a state in which the wheel bezel structure of FIG. 9 is viewed in another direction;
FIG. 11 is a cross-sectional view showing how a wheel bezel structure and a side surface member are coupled to each other, according to various embodiments of the disclosure; and
FIG. 12 is a view showing a rear surface of a wheel bezel structure and an upper surface of a side surface member, according to various embodiments of the disclosure.

### [Mode for Carrying out the Invention]

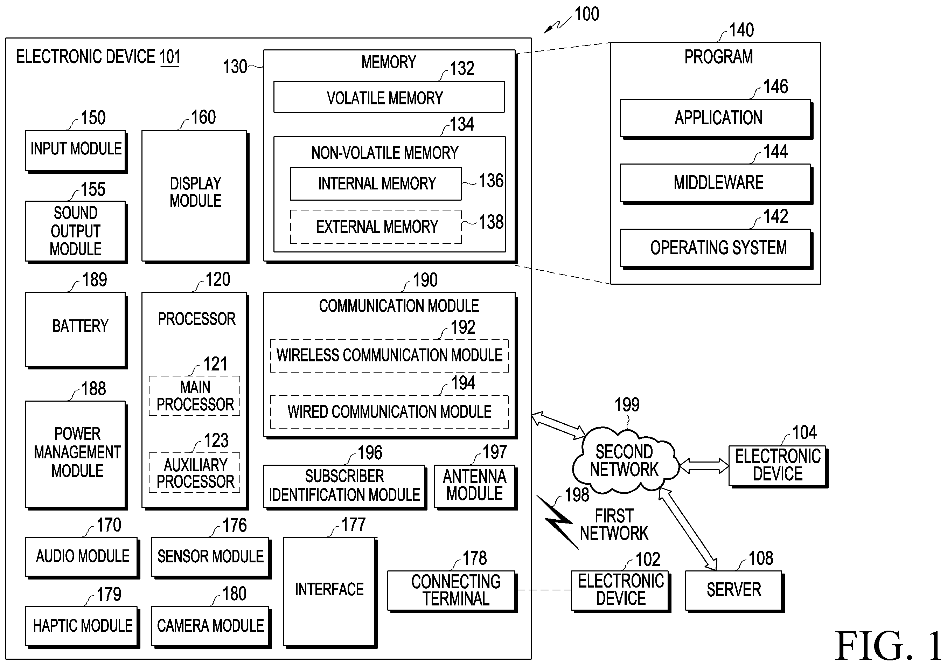

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

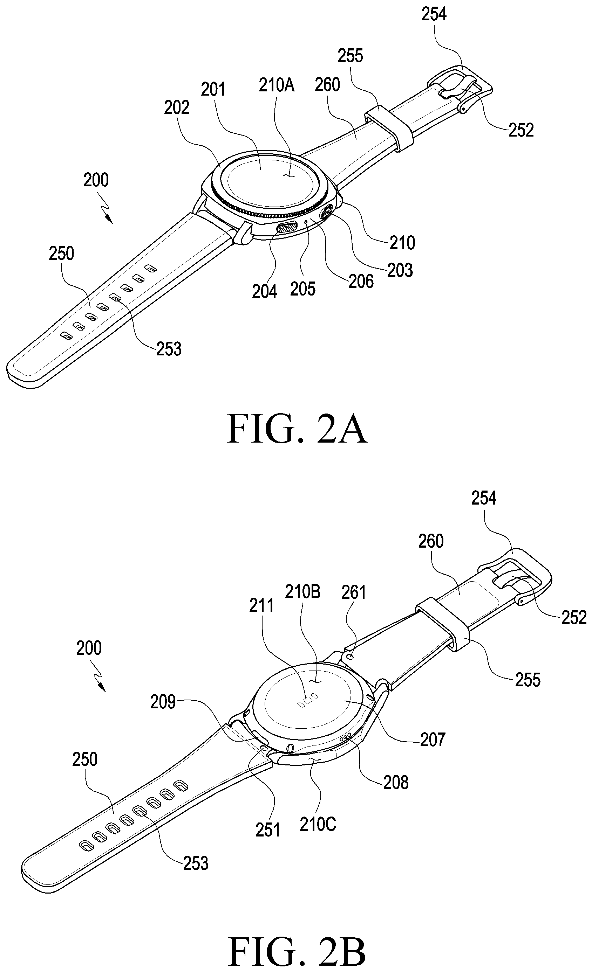

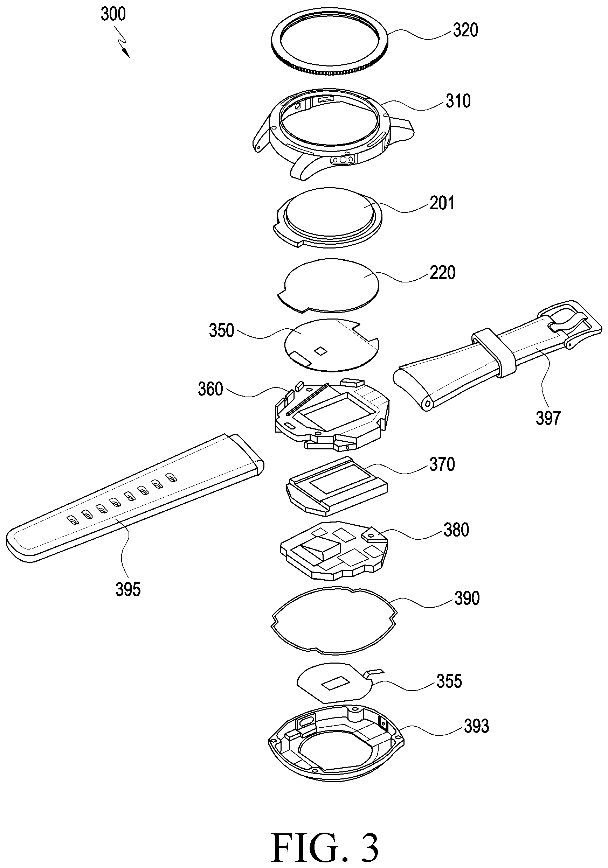

FIG. 2A is a perspective view of a front surface of an electronic device 200, according to an embodiment. FIG. 2B is a perspective view of a rear surface of the electronic device 200 of FIG. 2A. FIG. 3 is an exploded perspective view of the electronic device (e.g., 200) of FIG. 2A.

Referring to FIGS. 2A and 2B, an electronic device 200 according to an embodiment may include a housing 210 including a first surface (or a front surface) 210A, a second surface (or a rear surface) 210B, and a side surface 210C surrounding a space between the first surface 210A and the second surface 210B and coupling members 250 and 260 configured to be at least partially connected to the housing 210 and to detachably couple the electronic device to a part (e.g., wrist, ankle, etc.) of a user's body. In another embodiment (not shown), a housing may refer to a structure forming a part of the first surface 210A, the second surface 210B, and the side surface 210C of FIG. 2A. According to an embodiment, the first surface 210A may be formed by the front plate 201 (e.g., a glass plate or a polymer plate including various coating layers) of which at least a part is substantially transparent. The second surface 210B may be formed by a rear plate 207 (or a bottom plate) which is substantially opaque. The rear plate 207 may be formed of, for example, coated or colored glass, ceramic, polymer, metal (e.g., aluminum, stainless steel (STS), or magnesium), or a combination of at least two of the above materials. The side surface 210C may be coupled to the front plate 201 and the rear plate 207 and may be formed by a side bezel structure (or "side surface member") 206 including metal and/or polymer. In an embodiment, the rear plate 207 and the side bezel structure 206 may be integrally formed and include the same material (e.g., a metal material such as aluminum). The coupling members 250 and 260 may be formed in various materials and shapes. For example, integral and multiple unit links may be formed to flow with each other by woven fabric, leather, rubber, urethane, metal, ceramic, or a combination of at least two of the above materials.

According to an embodiment, the electronic device 200 may include at least one of a display 220 (see FIG. 2B), audio modules 205 and 208, a sensor module 211, key input devices 202, 203, and 204, and a connector hole 209. In an embodiment, the electronic device 200 may omit at least one of the elements (e.g., the key input devices 202, 203, and 204, the connector hole 209, or the sensor module 211) or additionally include another element.

A display 220 (see FIG. 3) may be exposed, for example, via a considerable portion of the front plate 201. The shape of the display 220 may be a shape corresponding to the shape of the front plate 201, and may have various shapes such as a circle, an ellipse, or a polygon. The display 220 may be coupled to or disposed adjacent to a touch detection circuit, a pressure sensor capable of measuring the intensity (pressure) of a touch, and/or a fingerprint sensor.

The audio modules 205 and 208 may include a microphone hole 205 and a speaker hole 208. The microphone hole 205 may have a microphone for acquiring external sound disposed therein, and in an embodiment, a plurality of microphones may be arranged to detect the direction of sound. The speaker hole 208 may be used for an external speaker and as a receiver for calls. In an embodiment, the speaker hole 208 and the microphone hole 205 may be implemented as a single hole, or a speaker may be included without the speaker hole 208 (e.g., a piezo speaker).

The sensor module 211 may produce a data value or an electrical signal corresponding to an internal operational state or an external environmental state. The sensor module 211 may include, for example, the sensor module 211 (e.g., an HRM sensor) disposed on the second surface 210B of the housing 210. The electronic device 200 may further include a sensor module not shown, for example, at least one among a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 210A of the housing 210 and rotatable in at least one direction, and/or side key buttons 203 and 204 disposed on the side surface 210C of the housing 210. The wheel key may have a shape corresponding to the shape of the front plate 202. In another embodiment, the electronic device 200 may not include some or all of the key input devices 202, 203, and 204 mentioned above, and the key input devices 202, 203, and 204 which are not included may be implemented in other forms such as soft keys on the display 220. The connector hole 209 may accommodate a connector (e.g., a USB connector) for transmitting and receiving power and/or data to and from an external electronic device, and may include another connector hole (not shown) capable of accommodating a connector for transmitting and receiving an audio signal to and from an external electronic device. The electronic device 200 may further include, for example, a connector cover (not shown) for covering at least a portion of the connector hole 209 and blocking external foreign substances from entering the connector hole.

The coupling members 250 and 260 may be detachably coupled to at least some areas of the housing 210 using locking members 251 and 261. The coupling members 250 and 260 may include one or more of a fixing member 252, a fixing member fastening hole 253, a band guide member 254, and a band fixing ring 255.

The fixing member 252 may be configured to fix the housing 210 and the coupling members 250 and 260 to a part of the user's body (e.g., wrist, ankle, etc.). The fixing member fastening hole 253 may correspond to the fixing member 252 to fix the housing 210 and the coupling members 250 and 260 to a part of the user's body. When the fixing member 252 is fastened to the fixing member fastening hole 253, the band guide member 254 may be configured to limit the range of movement of the fixing member 252, and thus, the coupling members 250 and 260 may be tightly coupled to a part of the user's body. The band fixing ring 255 may limit the movement range of the coupling members 250 and 260 while the fixing member 252 and the fixing member fastening hole 253 are fastened to each other.

Referring to FIG. 3, an electronic device 300 may include a side bezel structure 310, a wheel key 320, a front plate 201, a display 220, a first antenna 350, a second antenna 355, a support member 360 (e.g., a bracket), a battery 370, a printed circuit board 380, a sealing member 390, a rear plate 393, and coupling members 395 and 397. At least one of the elements of the electronic device 300 may be the same as or similar to at least one of the elements of the electronic device 200 of FIG. 2A or 2B, and duplicate descriptions will be omitted below. The support member 360 may be disposed inside the electronic device 300 to be connected to the side bezel structure 310 or integrally formed with the side bezel structure 310. The support member 360 may be formed of, for example, a metal material and/or a non-metal (e.g., polymer) material. The support member 360 may have one surface coupled to the display 220 and the other surface coupled to the printed circuit board 380. A processor, a memory, and/or an interface may be mounted on the printed circuit board 380. The processor may include, for example, one or more among a central processing unit, an application processor, a graphics processing unit (GPU), an application processor sensor processor, or a communication processor.

The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect, for example, the electronic device 300 to an external electronic device, and may include a USB connector, an SD card/MMC connector, or an audio connector.

The battery 370, which is a device for supplying power to at least one element of the electronic device 300, may include, for example, a non-rechargeable primary cell, or a rechargeable secondary cell, or a fuel cell. At least a portion of the battery 370 may be disposed, for example, substantially on the same plane as the printed circuit board 380. The battery 370 may be integrally disposed inside the electronic device 100, and may be detachably disposed to the electronic device 200.

The first antenna 350 may be disposed between the display 120 and the support member 360. The first antenna 350 may include, for example, a near field communication (NFC) antenna, a wireless charging antenna, and/or a magnetic secure transmission (MST) antenna. The first antenna 350 may, for example, perform short-range communication with an external device, wirelessly transmit and receive power required for charging, and transmit a short-range communication signal or a magnetic-based signal including payment data. In another embodiment, an antenna structure may be formed by a part of the side bezel structure 310 and/or the support member 360 or a combination thereof.

The second antenna 355 may be disposed between the circuit board 380 and the rear plate 393. For example, the second antenna may include a near field communication (NFC) antenna, a wireless charging antenna, and/or a magnetic secure transmission (MST) antenna. The second antenna 355, for example, may perform short-range communication with an external device, wirelessly transmit and receive power required for charging, and transmit a short-range communication signal or a magnetic-based signal including payment data. In another embodiment, an antenna structure may be formed by a part of the side bezel structure 310 and/or the rear plate 393 or a combination thereof.

The sealing member 390 may be located between the side bezel structure 310 and the rear plate 393. The sealing member 390 may be configured to block moisture and foreign matter introduced into a space surrounded by the side bezel structure 310 and the rear plate 393 from the outside.

Hereinafter, an electronic device 400 according to various embodiments of the disclosure will be described with reference to drawings. First, schematic elements of an electronic device 400 according to various embodiments of the disclosure may be described.

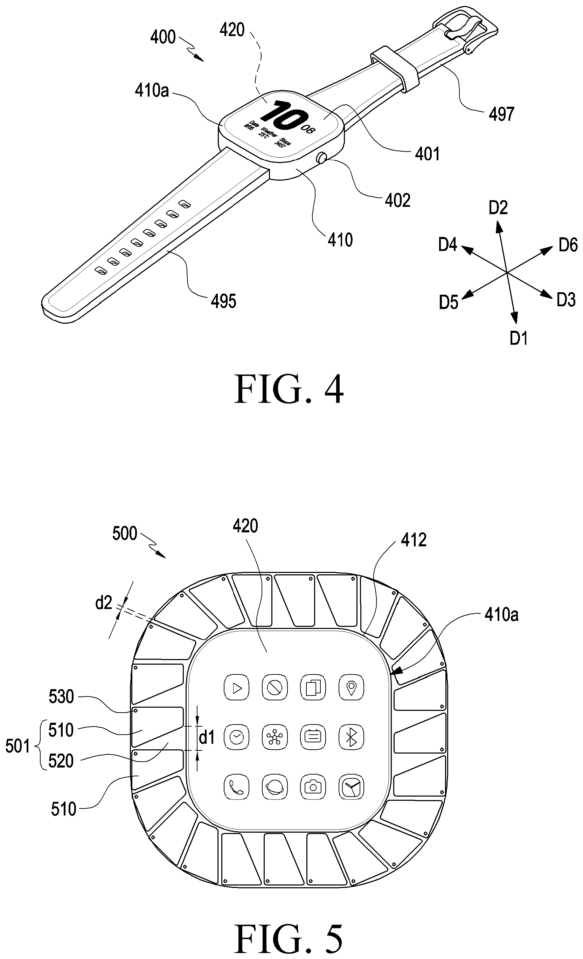

FIG. 4 is a perspective view showing an upper surface of an electronic device 400 according to various embodiments of the disclosure. FIG. 5 is a front view showing how a side surface member 410a and a wheel bezel structure 500 of an electronic device 400 according to various embodiments of the disclosure are coupled to each other.

An electronic device 400 according to various embodiments of the disclosure may be described by taking a "watch-type wearable electronic device" as an example. The electronic device 400 shown in the figure is for a watch-type wearable electronic device and may correspond to one example of various embodiments of the disclosure. As an example, when the electronic device (e.g., 400) is a watch-type wearable electronic device, a part of the housing (e.g., a rear plate) may come into contact with the user's wrist. However, the electronic device 400 mentioned in various embodiments of the disclosure is not limited thereto, and may include all the electronic devices having the wheel bezel structure 500 (e.g., a smart phone having a wheel structure, a table clock-type electronic device having a wheel structure, etc.). Therefore, not only a watch-type electronic device worn on the wrist but also an electronic device worn elsewhere on the body may correspond to the electronic device of the disclosure, and a type of electronic device used without being worn on the body may also fall within the scope of various embodiments of the disclosure. The size and shape of an electronic device according to various embodiments of the disclosure are not limited to a designated embodiment.

Referring to FIGS. 4 to 5, an electronic device 400 according to various embodiments of the disclosure may include a housing 410 and coupling members 495 and 497 connected to the housing 410. In addition, the electronic device 400 may include a display 420 and the wheel bezel structure 500.

Regarding the direction components described in FIG. 4, according to various embodiments of the disclosure, the direction components D1 and D2 may face in opposite directions. D3 and D4 may also face in opposite directions, and D5 and D6 may also face in opposite directions. According to an embodiment, the direction components D1, D3, D5 may indicate coordinate axes in which each direction component is orthogonal to each other. In the description below, D3, D4, D5, and D6 may form a virtual horizontal plane. The fact that the flow of an electronic device according to various embodiments of the disclosure is restricted on a horizontal plane may indicate that the flow in a direction parallel to the virtual horizontal plane is restricted.

According to various embodiments of the disclosure, in the description below, a first direction may refer to a direction component D1 or a direction parallel to the D1 direction, and a second direction may refer to a direction component D2 or a direction parallel to the direction D2. A third direction may be directed in a direction perpendicular to both the direction components D1 and D2. According to an embodiment, the third direction may be described as a direction component D3 or a direction parallel to D3, but it should be noted that the third direction does not necessarily refer to any one of the direction components D3, D4, D5, and D6.

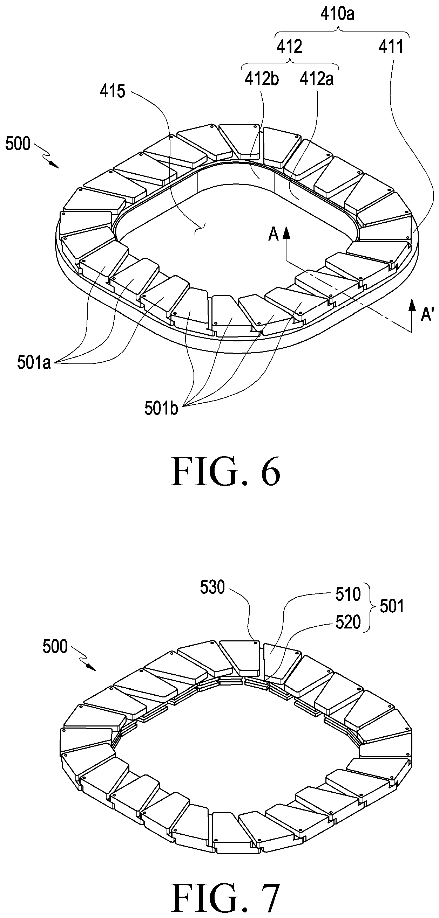

Referring to FIG. 4, the electronic device 400 according to various embodiments of the disclosure may include a front plate 401. The housing 410 of the electronic device 400 according to various embodiments of the disclosure may include a side surface member 410a and a rear plate (bottom plate) (e.g., the rear plate 207 of FIG. 2B). According to various embodiments of the disclosure, a first surface of the housing 410 may be a surface formed by the front plate 401, and a second surface of the housing 410 may be a surface formed by the rear plate (e.g., the rear plate 207 of FIG. 2B). The second surface of the electronic device 400 according to various embodiments may be manufactured in an approximately flat shape. At least a portion of the front plate 401 may be formed to be substantially transparent, and the display 420 disposed below the front plate 401 may be exposed to the outside via the front plate 401. According to an embodiment, the display 420 may be at least partially positioned within a first recess (e.g., a first recess 415 of FIG. 6 to be described below) formed on one surface (e.g., the second surface) of the housing 410.

Referring to FIG. 4, the side surface member 410a may be coupled to the rear plate to substantially seal the housing 410, prevent foreign matter from being introduced, and protect the housing from an external physical impact. According to an embodiment, the side surface member 410a may be integrally coupled to the rear plate, or the side surface member may be coupled to the rear plate from the state of being separated from each other. Separation of the side surface member 410a and the rear plate may enable the inside of the housing 410 of the electronic device 400 to be opened, and thus exchanging or repairing parts (e.g., a battery) mounted inside the housing 410 may be performed.

At least one key input device may be provided on a side surface of the housing 410. As an example of the key input device, a crown 402 may be formed on a side surface of the electronic device 400. According to an embodiment, the crown 402 should be located on the side surface of the housing 410, and thus the crown may have a small size due to limitations in the height (or thickness) of the housing 410. In an electronic device having a non-circular perimeter, it is difficult to have a wheel bezel structure which may be provided around a circular circumference, and thus, conventionally, input has been made via the crown 402 or other key input device or touch on a display including a touch panel. Accordingly, according to various embodiments of the disclosure, the wheel bezel structure 500 applicable to the electronic device 400 having a non-circular perimeter may be provided.

A configuration in which the wheel bezel structure 500 and the side surface member 410a are combined according to various embodiments of the disclosure may be briefly shown as illustrated in FIG. 5.

In the disclosure, the fact that an electronic device has a non-circular perimeter may indicate that a part of a housing (e.g., the side surface member 410a) has a non-circular perimeter, or that the display 420 has a non-circular perimeter. In addition, the fact may indicate that both a portion of the housing (e.g., the side surface member 410a) and the display 420 have a non-circular perimeter. Hereinafter, description may be made based on an embodiment in which both a portion of the housing (e.g., the side surface member 410a) and the display 420 have a non-circular perimeter.

Referring to FIG. 5, the wheel bezel structure 500 according to various embodiments may be disposed to surround the perimeter of the display 420. While being disposed to surround the perimeter of the display 420, the wheel bezel structure 500 may be coupled to at least a part of the side surface member 410a.

According to an embodiment, as shown in FIG. 5, the wheel bezel structure 500 may have a ring shape as a whole when viewed from above. When the side surface member 410a and the display 420 have a non-circular perimeter, the wheel bezel structure 500 may be stably seated on one surface (e.g., a first surface 411 of the side surface member 410a to be described later in FIG. 6 below) of the housing (e.g., the housing 410 of FIG. 4) along the non-circular perimeter. At least a portion of the side surface member 410a may include a portion having a diameter smaller than that of the wheel bezel structure 500, to allow the wheel bezel structure 500 to be stably seated.

According to various embodiments of the disclosure, the wheel bezel structure 500 may be a "wheel dial member" which is rotated by an operation of a user to select various functions mounted on an electronic device.

According to various embodiments of the disclosure, the wheel bezel structure 500 may include a plurality of bezel pieces in which a plurality of bezel pieces 501 are provided and in which the plurality of bezel pieces 501 are assembled using the connection members 530.

According to various embodiments, one bezel piece 501 may be formed by coupling a first body 510 and a second body 520 to each other. Adjacent bezel pieces among the plurality of bezel pieces may be connected to each other by at least one connection member 530.

The wheel bezel structure 500 may be formed by assembling a plurality of bezel pieces having the same shape and size. For example, the first body 510 of the bezel piece 501 and the second body 520 of another bezel piece 501 adjacent thereto may be connected to each other via the connection member 530. Further, the second body 520 of the bezel piece 501 and the first body 510 of still another bezel piece 501 adjacent thereto may be connected to each other via another connection member 530. In this way, the plurality of bezel pieces 501 may be coupled to each other to form one wheel bezel structure 500. FIG. 5 shows that 24 bezel pieces 501 and 24 connection members 530 are assembled to form one wheel bezel structure 500. However, the disclosure is not necessarily limited thereto, and the numbers of bezel pieces 501 and the connection members 530 may vary depending on the embodiment.

FIG. 6 is a perspective view showing how a wheel bezel structure 500 and a side surface member 410a are coupled to each other, according to various embodiments of the disclosure.

According to various embodiments, a side surface member 410a may include a first surface 411 and an annular protrusion portion 412. According to various embodiments, the annular protrusion portion 412 of the side surface member 410a may form a recess 415. The recess 415 may indicate a space formed therein when the side surface member 410a and the rear plate (e.g., the rear plate 207 of FIG. 2A) are coupled to each other.

At least one of various mounting parts, for example, a camera, a speaker, a circuit board, or various sensors, may be mounted in the recess 415 according to various embodiments. These parts may be mounted in the recess as one module or a combination of two or more modules. A display capable of displaying a screen (e.g., the display 420 of FIG. 5) may be at least partially mounted in the recess 415 according to various embodiments of the disclosure.

The first surface 411 may indicate a portion integrally extending from one end of the side surface member 410a. The first surface 411 may form a space in which the wheel bezel structure 500 is stably seated. According to various embodiments, the first surface 411 may face in a second direction (e.g., the direction D2 of FIG. 4).

The annular protrusion portion 412 may be formed to have a predetermined height at an end portion of the first surface 411 of the side surface member 410a in the second direction (e.g., the direction D2 or the direction parallel to the direction D2). According to various embodiments, the annular protrusion portion 412 may include a flat surface portion 412a and a curved surface portion 412b. The flat surface portion 412a may refer to a portion in which at least one approximately flat surface extends in parallel in one direction, and the curved surface portion 412b may refer to a portion which is seamlessly curved while having a predetermined curvature from one end connected to the flat surface portion 412a to the other end connected to another flat surface portion 412a. The annular protrusion portion 412 may be formed, for example, as shown in FIG. 6, by coupling the plurality of flat surface portions 412a and the plurality of curved surface portions 412b to each other. For example, the annular protrusion portion 412 of FIG. 6 may be formed such that four flat surface portions 412a and four curved surface portions 412b are continuously connected to each other to have a ring shape as a whole when the side surface member 410a is viewed from above.

As shown in FIG. 6, when the wheel bezel structure 500 and the side surface member 410a are coupled to each other, the wheel bezel structure 500 may be stably seated on the first surface 411 of the side surface member 410a. While the wheel bezel structure 500 is stably seated on the annular protrusion portion 412, the wheel bezel structure 500 may be implemented to rotate 360 degrees clockwise, counterclockwise, or in both directions. One portion of the wheel bezel structure 500 may face the first surface 411 and another portion thereof may face the annular protrusion portion 412. Some of the plurality of bezel pieces (e.g., hereinafter, referred to as "a plurality of first bezel pieces 501a") included in the wheel bezel structure 500 may face the flat surface portion 412a of the annular protrusion portion 412, and the others of the plurality bezel pieces (e.g., hereinafter, referred to as "a plurality of second bezel pieces 501b") may face the curved surface portion 412b of the annular protrusion portion 412.

The plurality of first bezel pieces 501a are arranged at a position facing the flat surface portion 412a in the embodiment shown in FIG. 6, but depending on the operation of rotating the wheel bezel structure 500 by a user, may be arranged at a position facing the curved surface portion 412b of the annular protrusion portion 412. The plurality of second bezel pieces 501b are arranged at a position facing the curved surface portion 412b in the embodiment shown in FIG. 6, but depending on the operation of rotating the wheel bezel structure 500 by a user, may be arranged at a position facing the flat surface portion 412a of the annual protrusion portion 412.

Referring to FIGS. 5 and 6 together, the plurality of first bezel pieces 501a adjacent to the flat surface portion 412a may be spaced apart from the wheel bezel structure 500 by a first gap d1, and the plurality of second bezel pieces 501b adjacent to the curved surface portion 412b may be spaced apart from the wheel bezel structure by a second gap d2 smaller than the first gap.

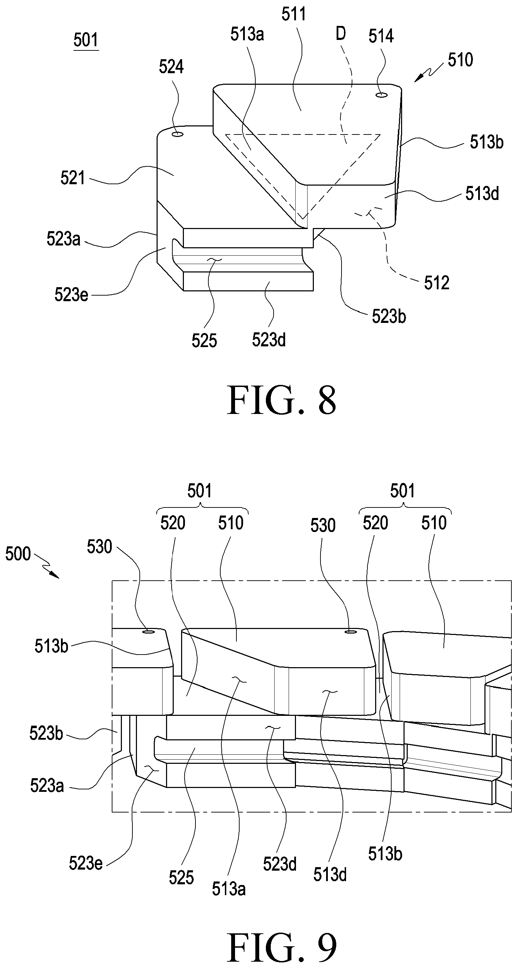

FIG. 7 is a perspective view showing a wheel bezel structure 500, according to various embodiments of the disclosure. FIG. 8 is a perspective view showing a bezel piece 501, according to various embodiments of the disclosure.

The wheel bezel structure 500 may be formed by having a plurality of bezel pieces 501 of FIG. 8 to assemble the bezel pieces arranged adjacent to each other using the connection member 530.

A bezel piece 501 may include a first body 510 and a second body 520 at least partially overlapping the first body 510. Referring to FIG. 8, an area D in which the first body 510 and the second body 520 overlap each other is shown. When the bezel piece 501 is viewed from above, for example, each of the first body 510 and the second body 520 may have a trapezoidal shape. The first body 510 and the second body 520 may be connected to each other via the area overlapping each other, and according to an embodiment, may be integrally formed. The first body 510 may be a portion of the wheel bezel structure 500 which is always exposed to the user, and the second body 520 may be a portion substantially covered by the first body 510 in the wheel bezel structure 500.

Each of the first body 510 and the second body 520 may include a plurality of surfaces.

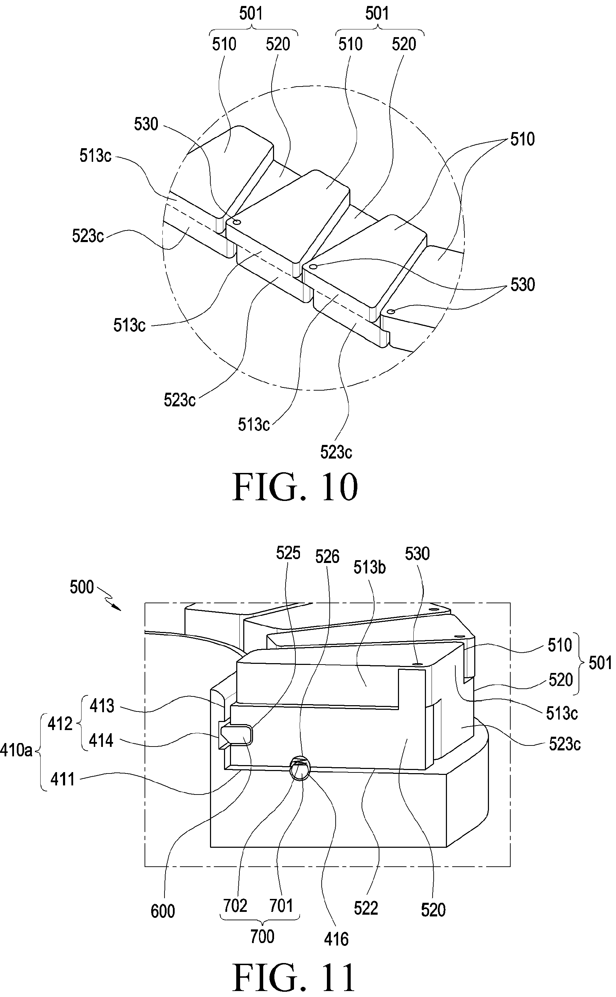

According to an embodiment, the first body 510 may include a first upper surface 511 and a first lower surface 512. The first upper surface 511 of the first body 510 may form an upper surface of the wheel bezel structure 500. According to another embodiment, the first body 510 may include a first side surface 513a, a second side surface 513b, and a first outer surface (e.g., a first outer surface 513c of FIG. 10 to be described later) facing outside when a plurality of bezel pieces are assembled to form the wheel bezel structure 500. In addition, the first body 510 may include a first inner surface 513d located in the opposite direction of the first outer surface. According to an embodiment, the second body 520 may include a second upper surface 521 and a second lower surface (e.g., a second lower surface 522 of FIG. 11 to be described later). The second lower surface 522 of the second body 520 may form a bottom surface (or a rear surface) of the wheel bezel structure 500. According to another embodiment, the second body 520 may include a third side surface 523a, a fourth side surface 523b, and a second outer surface (e.g., a second outer surface 523c of FIG. 10 to be described later) facing outside when a plurality of bezel pieces are assembled to form the wheel bezel structure 500. In addition, the second body 520 may include a second inner surface 523d located in the opposite direction of the second outer surface.

According to various embodiments, the first outer surface (e.g., the first outer surface 513c of FIG. 10 to be described later) of the first body 510 and the first inner surface 513d located at the side opposite to the first outer surface may be formed to be approximately parallel to each other. Alternatively, the first side surface 513a of the first body 510 and the second side surface 513b located at the opposite side of the first side surface 513a of the first body 510 may be formed to obliquely face each other. For example, the second side surface 513b may be formed approximately perpendicular to the first outer surface (e.g., the first outer surface 513c of FIG. 10 to be described later) and the first inner surface 513d, and the first side surface 513a may be formed to be inclined with respect to the first outer surface (e.g., the first outer surface 513c of FIG. 10 to be described later) and the first inner surface 513d.

According to various embodiments, the second outer surface (e.g., the second outer surface 523c of FIG. 10 to be described later) of the second body 520 and the second inner surface 523d located at the side opposite to the second outer surface may be formed to be approximately parallel to each other. Further, the third side surface 523a of the second body 520 and the fourth side surface 523b located at the side opposite to the third side surface 523a may be formed to obliquely face each other. For example, the fourth side surface 523b may be approximately perpendicular to the second outer surface (e.g., the second outer surface 523c of FIG. 10 to be described later) and the second inner surface 523d, and the third side surface 523a may be formed to be inclined with respect to the second outer surface (e.g., the second outer surface 523c of FIG. 10 to be described later) and the second inner surface 523d.

According to various embodiments, a first through-hole 514 for insertion and coupling of a connection member (e.g., the connection member 530 of FIG. 7) may be formed through the first body 510. The first through-hole 514 may be formed to extend through the first upper surface 511 and the first lower surface 512 of the first body 510. A second through-hole 524 for insertion and coupling of the connection member (e.g., the connection member 530 of FIG. 7) may be formed through the second body 520. The second through-hole 524 may be formed to extend through the second upper surface 521 and the second lower surface 522 of the second body 520.

According to various embodiments, a third recess 525 may be formed on the second inner surface 523d of the second body 520. The third recess 525 may be configured to accommodate a ring structure 600 to be described later with reference to FIG. 11.

According to various embodiments, the second body 520 may further include a first inclined side surface 523e formed adjacent to the third side surface 523a and formed to be capable of facing the fourth side surface 523b of the adjacent bezel structure. For example, when the third side surface 523a is formed to be approximately perpendicular with respect to the second outer surface (e.g., the second outer surface 523c of FIG. 10 to be described later) and the second inner surface 523d, the first inclined side surface 523e may indicate a portion formed in the inclined direction with respect to each of the third side surface 523a and the second inner surface 523d between the third side surface 523a and the second inner surface 523d.

The third recess 525 and the first inclined side surface 523e will be described in more detail with reference to FIG. 9.

FIG. 9 is a perspective view showing how a plurality of bezel pieces 501 of a wheel bezel structure 500 are coupled to each other, according to various embodiments of the disclosure.

Referring to FIGS. 8 and 9 together, the plurality of bezel pieces 501 are assembled via the connection member 530. Any one bezel piece may be assembled to another bezel piece via the connection member 530 configured to be inserted into and coupled to the first through-hole 514 provided through the first body 510 and the second through-hole 524 provided through the second body 520 of another bezel piece adjacent thereto. The connection member 530 may correspond to a pin member. Such an assembly structure may be continuously formed several times or more to form the wheel bezel structure 500. In the wheel bezel structure 500, the first body 510 of any one bezel piece may at least partially overlap the second body 520 of another bezel piece adjacent thereto.

Any one bezel piece may be configured to rotate relative to each other about one connection member 530 as an axis while at least partially overlapping another bezel piece adjacent thereto. Accordingly, the area in which the first body 510 of any one bezel piece and the second body 520 of another bezel piece adjacent thereto overlap each other may vary.

According to various embodiments, the third recess 525 formed on the second inner surface 523d of the second body 520 of any one bezel piece may be disposed in parallel with the third recess 525 of another bezel piece adjacent thereto. Therefore, the third recesses 525 formed on the plurality of bezel pieces may substantially form an annular recess structure formed along the whole inner side surface of the wheel bezel structure 500.

In the wheel bezel structure 500, any one bezel piece may be formed so that a plurality of surfaces thereof face those of another bezel piece adjacent thereto. According to an embodiment, in the wheel bezel structure 500, any one bezel piece may be formed so that at least one surface thereof is in contact with another bezel piece adjacent thereto. For example, the third side surface 523a of the second body 520 of any one bezel piece may be formed to be in contact with a fourth side surface 524a of the second body 520 of another bezel piece adjacent thereto. According to an embodiment, when the third side surface 523a of the second body 520 of any one bezel piece is in contact with the fourth side surface 524a of the second body 520 of another bezel piece adjacent thereto, the first inclined side surface 523e may be further formed on the second body 520 of the bezel piece so as to prevent abrasion due to friction.

According to an embodiment, referring to FIGS. 8 and 9 together, when any one bezel piece moves together with another bezel piece adjacent thereto, the bezel pieces may be configured such that the first bodies 510 are not in contact with each other and only the second bodies 520 come into contact with each other.

FIG. 10 is a perspective view showing a state in which the wheel bezel structure 500 shown in FIG. 9 is viewed in another direction.

In an embodiment of FIG. 10, the plurality of bezel pieces 501 are shown to be assembled via the connection member 530 as shown in the embodiment of FIG. 9.

FIG. 9 may show the inner peripheral edge (inner perimeter) of the wheel bezel structure 500, and FIG. 10 may show the outer peripheral edge (outer perimeter) of the wheel bezel structure 500.

The inner peripheral edge of the wheel bezel structure 500 may be formed by the first inner surface 513d of the first body 510 and the second inner surface 523d of the second body 520, and the outer peripheral edge of the wheel bezel structure 500 may be formed by the first outer surface 513c of the first body 510 and the second outer surface 523c of the second body 520.

According to various embodiments, when the plurality of bezel pieces 501 are continuously assembled to configure the wheel bezel structure 500, the connection member 530 may be formed adjacent to the outer peripheral edge (outer perimeter) of the first body 510 and the outer peripheral edge (outer perimeter) of the second body 520. According to an embodiment, unlike that shown in FIG. 10, the through-hole formed through the first body and the through-hole formed through the second body may be formed adjacent to the inner peripheral edge (inner perimeter) of the first body and the inner peripheral edge (inner perimeter) of the second body, and the connection member may be inserted into and coupled to the through-holes. In this case, the movable range according to the interlocking between any one bezel piece and another bezel piece adjacent thereto may be narrower compared to that of the embodiment shown in FIG. 10. When the movable range according to the interlocking between any one bezel piece and another bezel piece adjacent thereto is formed to be narrow, it may be necessary to configure the wheel bezel structure 500 by using more bezel pieces. Therefore, according to various embodiments of the disclosure, as shown in FIG. 10, the through-hole (e.g., the first through-hole 514 of FIG. 8) formed through the first body 510 and the through-hole (e.g., the second through-hole 524 of FIG. 8) formed through the second body 520 may be configured to be formed adjacent to the outer peripheral edge (outer perimeter) of the first body 510 and the outer peripheral edge (outer perimeter) of the second body 520 and to allow the connection member 530 to be inserted thereinto and coupled thereto.

FIG. 11 is a cross-sectional view showing how a wheel bezel structure 500 and a side surface member 410a are coupled to each other, according to various embodiments of the disclosure. FIG. 11 may show a cross-section of the wheel bezel structure taken along line A-A' of FIG. 6.

Referring to FIG. 11, a side surface member 410a may include a second surface 413 and a second recess 414. The second surface 413 may be formed to be substantially perpendicular to the first surface 411. The second surface 413 may indicate a portion of surface included in the annular protrusion portion 412 extending from the first surface 411. The second recess 414 may be formed on a portion of the second surface 413. According to an embodiment, the second recess 414 may be a portion concavely formed on the second surface 413. The second recess 414 may be formed to elongate along the perimeter of the annular protrusion portion 412.

In an electronic device (e.g., the electronic device 400 of FIG. 4) according to various embodiments of the disclosure, the wheel bezel structure 500 may be stably seated on the side surface member 410a to be rotatable around the annular protrusion portion 412, and an element for preventing the separation of the wheel bezel structure 500 may be additionally provided. The electronic device (e.g., the electronic device 400 of FIG. 4) may include a ring structure 600 as an element for limiting the movement in the first direction (e.g., the direction D1 of FIG. 4) or the second direction (e.g., the direction D2 of FIG. 4) of the wheel bezel structure 500.

Referring to FIG. 11, if the wheel bezel structure 500 is stably seated on the side surface member 410a, the wheel bezel structure 500 may be spaced a predetermined distance apart from the annular protrusion portion 412, and thus may form a space therebetween. The ring structure 600 according to various embodiments of the disclosure may be disposed in the space therebetween. According to an embodiment, the ring structure 600 may be disposed in the space formed by the second recess 414 of the side surface member 410a and the third recess 525 of the wheel bezel structure 500. The ring structure 600 may be positioned between the wheel bezel structure 500 and the annular protrusion portion 412 so that the wheel bezel structure 500 may be stably seated on the annular protrusion portion 412 without being in direct contact with the annular protrusion portion 412 and may be in direct contact with the first surface 411 of the side surface member 410a.

The ring structure 600 according to various embodiments of the disclosure may be molded to have a thin thickness compared to the length of the perimeter. The ring structure 600 may be elastically transformable and bendable. Accordingly, while the wheel bezel structure 500 rotates around the annular protrusion portion 412, the ring structure 600 may press the wheel bezel structure 500 toward the side surface member 410a, and thus the wheel bezel structure 500 may be prevented from being separated from the side surface member 410a. As another embodiment, the wheel bezel structure 500 may be coupled to the side surface member 410a by using the elasticity of the ring structure 600.

As will be described later, a portion of the cross-sectional shape of the ring structure 600 according to various embodiments of the disclosure may have an "L" shape, another portion may have a rectangular shape, and still another portion may have a "hook" shape.

The ring structure 600 according to various embodiment of the disclosure may include a material capable of elastic transformation. For example, the ring structure 600 according to various embodiments of the disclosure may be formed of a polymeric material. The polymeric material may include at least one among polyoxymethylene, poly-acetal, acetal resin, and nylon (polyamide). In contrast, the wheel bezel structure 600 may be formed of a hard material. Depending on the material characteristics of the ring structure 600, impact durability during rotation of the wheel bezel structure 600 may be secured, and noise due to friction during rotation may be minimized.

According to various embodiments of the disclosure, a detent groove 416 may be provided on the first surface 411 of the side surface member 410a. A detent structure 700 including a detent ball 701 and a detent spring 702 may be formed in a bezel piece to correspond to the detent groove 416.

At least a portion of the detent structure 700 including the detent ball 701 and the detent spring 702 may be accommodated in the detent groove 416.

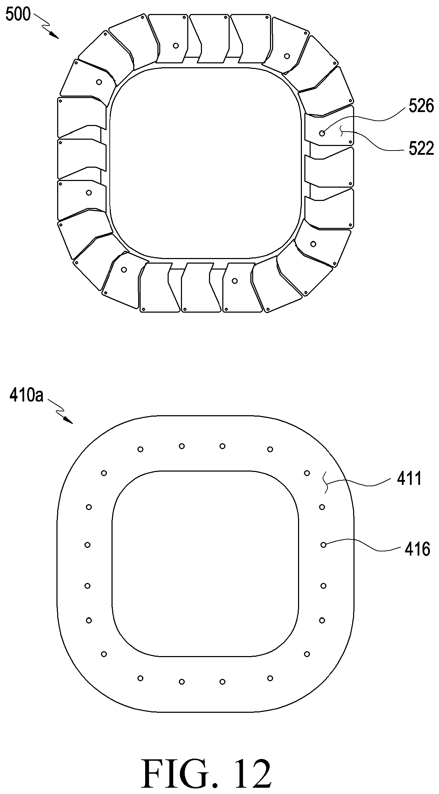

FIG. 12 is a view showing a rear surface 522 of a wheel bezel structure 500 and an upper surface (e.g., the first surface 411 of the side surface member) of a side surface member 410a, according to various embodiments of the disclosure.

Referring to FIGS. 11 and 12 together, an electronic device (e.g., the electronic device 400 of FIG. 4) may include detent grooves 416 and a plurality of detent structures 700 each including a detent ball 701 and a detent spring 702.

According to an embodiment, the plurality of detent grooves 416 may be formed on the first surface 411 of the side surface member 410a, and the plurality of detent grooves 416 may be formed to be curved and extend along the rotational direction of the wheel bezel structure 500 on the first surface.

According to an embodiment, the detent ball 701 may be connected to the detent spring 702, and the detent spring 702 may be fixedly disposed to a ball accommodation portion 526 formed on the second surface 522. Further, while being elastically supported by the detent spring 702, the detent ball 701 may be formed to be at least partially accommodated in the detent groove 416. The detent ball 701 may move in the first direction (e.g., the direction D1 or the direction parallel to the direction D1) or in the second direction (e.g., the direction D2 or the direction parallel to the direction D2) while the wheel bezel structure 500 rotates.

For example, when the detent ball 701 is accommodated in the detent groove 416, if the wheel bezel structure 500 rotates, the detent ball 701 may come into contact with a portion where the detent groove 416 is not formed and may then be inserted into another detent groove 416. According to an embodiment, the detent ball 701 may be moved by the detent spring 702 in the first direction (e.g., the direction D1 of FIG. 4) or in the second direction (e.g., the direction D2 of FIG. 4) to be inserted into the detent groove 416, and then a user may experience the sensation of detents based on the rotation of the wheel bezel structure 500.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments of the disclosure, an electronic device including: a housing (e.g., the housing 410 of FIG. 4); a display (e.g., the display 420 of FIG. 4) at least partially located in a first recess (e.g., the first recess 415 of FIG. 6) formed on one surface of the housing; and a wheel bezel structure (e.g., the wheel bezel structure 500 of FIG. 5) which is rotatable around the display and comprises a plurality of bezel pieces (e.g., bezel pieces 501), each of which is assembled with another bezel pieces adjacent thereto via at least one connection member (e.g., the connection member 530 of FIG. 5) may be provided.

According to various embodiments, each of the bezel pieces (e.g., the bezel pieces 501 of FIG. 5) may include a first body (e.g., the first body 510 of FIG. 5) and a second body (e.g., the second body 520 of FIG. 5) at least partially overlapping the first body.

According to various embodiments, the first body (e.g., the first body 510 of FIG. 5) may include a first side surface (e.g., the first side surface 513a of FIG. 8) and a second side surface (e.g., the second side surface 513b of FIG. 8) obliquely facing each other, a first outer surface (e.g., the first outer surface 513c of FIG. 10) facing toward the outside in case that a plurality of bezel pieces are assembled to configure the wheel bezel structure.

According to various embodiments, the first body (e.g., the first body 510 of FIG. 5) may include a first inner surface (e.g., the first inner surface 513d of FIG. 8) facing in the direction opposite to the first outer surface (e.g., the first outer surface 513c of FIG. 10).

According to various embodiments, the second body (e.g., the second body 520 of FIG. 5) may include a third side surface (e.g., the third side surface 523a of FIG. 8) and a fourth side surface (e.g., the fourth side surface 523b of FIG. 8) obliquely facing each other, a second outer surface (e.g., the second outer surface 523c of FIG. 10) facing toward the outside in case that a plurality of bezel pieces are assembled to configure the wheel bezel structure.

According to various embodiments, the second body may include a second inner surface (e.g., the second inner surface 523d of FIG. 8) facing in the direction opposite to the second outer surface.

According to various embodiments, a third recess (e.g., the third recess 525 of FIG. 8) capable of accommodating the ring structure may be formed on the second inner surface.

According to various embodiments, the second body may be formed adjacent to the third side surface (e.g., the third side surface 523a of FIG. 8) and may further include a first inclined side surface (e.g., the first inclined side surface 523e of FIG. 8) formed to face the fourth side surface of an adjacent bezel structure.

According to various embodiments, the connection member (e.g., the connection member 530 of FIG. 5) may be a pin member penetrating through a first body of one bezel piece and a second body of the other bezel piece among two bezel pieces adjacent to each other.

According to various embodiments, the connection member (e.g., the connection member 530 of FIG. 5) may be formed adjacent to the outer peripheral edge (outer perimeter) of the first body (e.g., the first body 510 of FIG. 5) and the outer peripheral edge (outer perimeter) of the second body (e.g., the second body 520 of FIG. 5).

According to various embodiments, the housing may include a rear plate and a side surface member (e.g., the side surface member 410a of FIG. 5) connected to the rear plate, and the side surface member may include an annular protrusion portion (e.g., the annular protrusion portion 412 of FIG. 6).

According to various embodiments, the annular protrusion portion (e.g., the annular protrusion portion 412 of FIG. 6) may include a flat surface portion (e.g., the flat surface portion 412a of FIG. 6) and a curved surface portion (e.g., the curved surface portion 412b of FIG. 6).

According to various embodiments, in the wheel bezel structure (e.g., the wheel bezel structure 500 of FIG. 5), a plurality of bezel pieces adjacent to the flat surface portion (e.g., the flat surface portion 412a of FIG. 6) may be spaced apart from each other by a first gap (e.g., the first gap d1 of FIG. 5), and a plurality of bezel pieces adjacent to the curved surface portion may be spaced apart from each other by a second gap (e.g., the second gap d2 of FIG. 5) narrower than the first gap.

According to various embodiments, the electronic device may further include: a second recess (e.g., the second recess 414 of FIG. 11) formed on one surface of the side surface member (e.g., the side surface member 410a of FIG. 5); and a ring structure (e.g., the ring structure 600 of FIG. 11) accommodated in the second recess and configured to prevent the separation of the wheel bezel structure.

According to various embodiments, the electronic device (e.g., the electronic device 400 of FIG. 4) may further include a detent spring (e.g., the detent spring 702 of FIG. 11) and a detent ball (e.g., the detent ball 701 of FIG. 11).

According to various embodiments, the detent spring and the detent ball may be formed on a rear surface (e.g., the rear surface 522 of FIG. 5) of the bezel piece (e.g., the bezel piece 501 of FIG. 11).

According to various embodiments of the disclosure, an electronic device including: a housing (e.g., the housing 410 of FIG.4) including a rear plate directed to a first direction (e.g., the direction D1 of FIG. 4) and a side surface member (e.g., the side surface member 410a of FIG. 4) connected to the rear plate and forming a first recess (e.g., the recess 415 of FIG. 6) by using the rear plate and the side surface member; a display (e.g., the display 420 of FIG. 4) at least partially located in the recess; a wheel bezel structure (e.g., the wheel bezel structure 500 of FIG. 5), which is a wheel bezel structure rotatable around the display, including a first body (e.g., the first body 510 of FIG. 5) and a second body (e.g., the second body 520 of FIG. 5) at least partially overlapping the first body and a plurality of bezel pieces (e.g., the bezel pieces 501), each of which is assembled with another bezel piece adjacent thereto via at least one connection member (e.g., the connection member 530 of FIG. 5); a second recess (e.g., the recess 414 of FIG. 11) formed on one surface of the side surface member; and a ring structure (e.g., the ring structure (e.g., the ring structure 600 of FIG. 11) accommodated in the second recess and configured to prevent the separation of the wheel bezel structure may be provided.

According to various embodiments, the first body may include a first side surface and a second side surface formed to obliquely face each other, a first outer surface facing toward the outside when a plurality of bezel pieces are assembled to form the wheel bezel structure, and a first inner surface located in the direction opposite to the first outer surface, and the second body may include a third side surface and a fourth side surface formed to obliquely face each other, a second outer surface facing the outside when a plurality of bezel pieces are assembled to form the wheel bezel structure, and a second inner surface located in the direction opposite to the second outer surface.

According to various embodiments, the connection member (e.g., the connection member 530 of FIG. 5) may be a pin member penetrating through a first body of one bezel piece and a second body of another bezel piece among two bezel pieces adjacent to each other.

According to various embodiments, the annular protrusion portion (e.g., the annular protrusion portion 412 of FIG. 6) may include a flat surface portion (e.g., the flat surface portion 412a of FIG. 6) and a curved surface portion (e.g., the curved surface portion 412b of FIG. 6).

According to various embodiments, in the wheel bezel structure (e.g., the wheel bezel structure 500 of FIG. 5), a plurality of bezel pieces adjacent to the flat surface portion (e.g., the flat surface portion 412a of FIG. 6) may be spaced apart from each other by a first gap (e.g., the first gap d1 of FIG. 5), and a plurality of bezel pieces adjacent to the curved surface portion may be spaced apart from each other by a second gap (e.g., the second gap d2 of FIG. 5) narrower than the first gap.

In the above, the detailed description of the disclosure has been made with respect to specific embodiments, but it will be obvious to those skilled in the art that various modifications are possible without departing from the scope of the disclosure.

## Claims

1. An electronic device (101, 400) comprising:
a housing (410) ;
a display (420) disposed at the housing; and
a wheel bezel structure (500) mounted on the electronic device (101, 400), and configured to rotate around the display by an operation of a user to select functions,
wherein the electronic device has a non-circular perimeter on at least one of a part of the housing and the display, and
wherein the wheel bezel structure comprises a plurality of bezel pieces (501), each of which is assembled with another bezel piece adjacent thereto via at least one connection member (530).

2. The electronic device of claim 1, wherein each of the bezel pieces comprises a first body (510) and a second body (520) at least partially overlapping the first body.

3. The electronic device of claim 2, wherein the first body comprises a first side surface and a second side surface, which are configured obliquely to face each other, and a first outer surface facing toward the outside in case that a plurality of bezel pieces are assembled to configure the wheel bezel structure.

4. The electronic device of claim 3, wherein the first body comprises a first inner surface facing in the direction opposite to the first outer surface.

5. The electronic device of claim 2, wherein the second body comprises a third side surface and a fourth side surface, which are configured obliquely to face each other and a second outer surface facing the outside in case that a plurality of bezel pieces are assembled to configure the wheel bezel structure.

6. The electronic device of claim 5, wherein the second body comprises a second inner surface facing in the direction opposite to the second outer surface.

7. The electronic device of claim 6, wherein a third recess (525) is disposed on the second inner surface.

8. The electronic device of claim 2, wherein the second body further comprises a first inclined side surface disposed adjacent to the third side surface and configured to be capable of facing the fourth side surface of the adjacent bezel structure.

9. The electronic device of claim 1, wherein the connection member is a pin member penetrating through a first body of one bezel piece and a second body of the other bezel piece, wherein both the two bezel pieces are adjacent to each other.

10. The electronic device of claim 9, wherein the connection member is disposed adjacent to an outer peripheral edge of the first body and an outer peripheral edge of the second body.

11. The electronic device of claim 1, wherein the housing comprises a rear plate and a side surface member connected to the rear plate, and
the side surface member comprises an annular protrusion portion.

12. The electronic device of claim 11, wherein the annular protrusion portion comprises a flat surface portion and a curved surface portion.

13. The electronic device of claim 12, wherein the wheel bezel structure comprises a plurality of bezel pieces adjacent to the flat surface portion and spaced apart from each other by a first gap, and a plurality of bezel pieces adjacent to the curved surface portion and spaced apart from each other by a second gap narrower than the first gap.

14. The electronic device of claim 11, comprising:
a second recess formed on one surface of the side surface member; and
a ring structure (600) accommodated in the second recess and configured to prevent the separation of the wheel bezel structure.

15. The electronic device of claim 1, further comprising a detent spring (720) and a detent ball (701).

## Patentansprüche

1. Elektronische Vorrichtung (101, 400), die Folgendes umfasst:
ein Gehäuse (410);
ein Display (420), das an dem Gehäuse angeordnet ist; und
eine Radlünettenstruktur (500), die an der elektronischen Vorrichtung (101, 400) montiert ist und konfiguriert ist, um sich durch eine Betätigung des Benutzers um das Display zu drehen, um Funktionen auszuwählen,
wobei die elektronische Vorrichtung einen nicht-kreisförmigen Umfang an einem Teil des Gehäuses und/oder des Displays aufweist, und
wobei die Radlünettenstruktur eine Vielzahl von Lünettenteilen (501) umfasst, von denen jedes mit einem anderen, daran angrenzenden Lünettenteil über mindestens ein Verbindungselement (530) zusammengesetzt ist.

2. Elektronische Vorrichtung nach Anspruch 1, wobei jedes der Lünettenteile einen ersten Körper (510) und einen zweiten Körper (520) umfasst, der den ersten Körper zumindest teilweise überlappt.

3. Elektronische Vorrichtung nach Anspruch 2, wobei der erste Körper eine erste Seitenfläche und eine zweite Seitenfläche, die schräg zueinander angeordnet sind, und eine erste Außenfläche umfasst, die nach außen weist, falls eine Vielzahl von Lünettenteilen zusammengesetzt sind, um die Radlünettenstruktur zu konfigurieren.

4. Elektronische Vorrichtung nach Anspruch 3, wobei der erste Körper eine erste Innenfläche umfasst, die in die entgegengesetzte Richtung zu der ersten Außenfläche weist.

5. Elektronische Vorrichtung nach Anspruch 2, wobei der zweite Körper eine dritte Seitenfläche und eine vierte Seitenfläche, die schräg zueinander angeordnet sind, und eine zweite Außenfläche umfasst, die nach außen weist, falls eine Vielzahl von Lünettenteilen zusammengesetzt sind, um die Radlünettenstruktur zu konfigurieren.

6. Elektronische Vorrichtung nach Anspruch 5, wobei der zweite Körper eine zweite Innenfläche umfasst, die in die entgegengesetzte Richtung zu der zweiten Außenfläche weist.

7. Elektronische Vorrichtung nach Anspruch 6, wobei eine dritte Vertiefung (525) auf der zweiten Innenfläche angeordnet ist.

8. Elektronische Vorrichtung nach Anspruch 2, wobei der zweite Körper ferner eine erste geneigte Seitenfläche umfasst, die angrenzend an die dritte Seitenfläche angeordnet ist und konfiguriert ist, um der vierten Seitenfläche der angrenzenden Lünettenstruktur zugewandt sein zu können.

9. Elektronische Vorrichtung nach Anspruch 1, wobei das Verbindungselement ein Stiftelement ist, das durch einen ersten Körper eines Lünettenteils und einen zweiten Körper des anderen Lünettenteils hindurchdringt, wobei die beiden Lünettenteile aneinander angrenzen.

10. Elektronische Vorrichtung nach Anspruch 9, wobei das Verbindungselement angrenzend an eine äußere Umfangskante des ersten Körpers und eine äußere Umfangskante des zweiten Körpers angeordnet ist.

11. Elektronische Vorrichtung nach Anspruch 1, wobei das Gehäuse eine Rückplatte und ein Seitenflächenelement umfasst, das mit der Rückplatte verbunden ist, und
das Seitenflächenelement einen ringförmigen Vorsprungsabschnitt umfasst.

12. Elektronische Vorrichtung nach Anspruch 11, wobei der ringförmige Vorsprungsabschnitt einen flachen Oberflächenabschnitt und einen gekrümmten Oberflächenabschnitt umfasst.

13. Elektronische Vorrichtung nach Anspruch 12, wobei die Radlünettenstruktur eine Vielzahl von Lünettenteilen, die an den flachen Oberflächenabschnitt angrenzen und durch einen ersten Spalt voneinander beabstandet sind, und eine Vielzahl von Lünettenteilen umfasst, die an den gekrümmten Oberflächenabschnitt angrenzen und durch einen zweiten Spalt voneinander beabstandet sind, der schmaler als der erste Spalt ist.

14. Elektronische Vorrichtung nach Anspruch 11, die Folgendes umfasst:
eine zweite Vertiefung, die auf einer Oberfläche des Seitenflächenelements ausgebildet ist; und
eine Ringstruktur (600), die in der zweiten Vertiefung untergebracht ist und konfiguriert ist, um die Trennung der Radlünettenstruktur zu verhindern.

15. Elektronische Vorrichtung nach Anspruch 1, die ferner eine Rastfeder (720) und eine Rastkugel (701) umfasst.

## Revendications

1. Dispositif électronique (101, 400) comprenant :
un boîtier (410) ;
un écran (420) disposé sur le boîtier ; et
une structure de cadre à roue (500) montée sur le dispositif électronique (101, 400) et configurée pour tourner autour de l'écran par un utilisateur pour sélectionner des fonctions,
où le dispositif électronique présente un périmètre non circulaire sur au moins un parmi une partie du boîtier et l'écran, et
où la structure de cadre à roue comprend une pluralité de pièces de cadre (501), chacune d'entre elles est assemblée à une autre pièce de cadre adjacente à celle-ci via au moins un élément de connexion (530).

2. Dispositif électronique selon la revendication 1, où chacune des pièces de cadre comprend un premier corps (510) et un deuxième corps (520) chevauchant au moins partiellement le premier corps.

3. Dispositif électronique selon la revendication 2, où le premier corps comprend une première surface latérale et une deuxième surface latérale qui sont configurées de manière oblique pour se faire face, et une première surface extérieure orientée vers l'extérieur dans le cas où une pluralité de pièces de cadre est assemblée pour configurer la structure de cadre à roue.

4. Dispositif électronique selon la revendication 3, où le premier corps comprend une première surface intérieure orientée dans la direction opposée à la première surface extérieure.

5. Dispositif électronique selon la revendication 2, où le deuxième corps comprend une troisième surface latérale et une quatrième surface latérale qui sont configurées de manière oblique pour se faire face, et une deuxième surface extérieure orientée vers l'extérieur dans le cas où une pluralité de pièces de cadre est assemblée pour configurer la structure de cadre à roue.

6. Dispositif électronique selon la revendication 5, où le deuxième corps comprend une deuxième surface intérieure orientée dans la direction opposée à la deuxième surface extérieure.

7. Dispositif électronique selon la revendication 6, où un troisième renfoncement (525) est disposé sur la deuxième surface intérieure.

8. Dispositif électronique selon la revendication 2, où le deuxième corps comprend en outre une première surface latérale inclinée disposée de manière adjacente à la troisième surface latérale et configurée pour être capable de faire face à la quatrième surface latérale de la structure de cadre adjacente.

9. Dispositif électronique selon la revendication 1, où l'élément de connexion est un élément d'épingle pénétrant à travers un premier corps d'une pièce de cadre et un deuxième corps de l'autre pièce de cadre, où les deux pièces de cadre sont adjacentes l'une de l'autre.

10. Dispositif électronique selon la revendication 9, où l'élément de connexion est disposé de manière adjacente à un bord périphérique extérieur du premier corps et à un bord périphérique extérieur du deuxième corps.

11. Dispositif électronique selon la revendication 1, où le boîtier comprend une plaque arrière et un élément de surface latérale relié à la plaque arrière, et
l'élément de surface latérale comprend une partie saillante annulaire.

12. Dispositif électronique selon la revendication 11, où la partie saillante annulaire comprend une partie de surface plane et une partie de surface incurvée.

13. Dispositif électronique selon la revendication 12, où la structure de cadre à roue comprend une pluralité de pièces de cadre adjacentes à la partie de surface plane et espacées les unes des autres par un premier espace, et une pluralité de pièces de cadre adjacentes à la partie de surface incurvée et espacées les unes des autres par un deuxième espace plus étroit que le premier espace.

14. Dispositif électronique selon la revendication 11, comprenant :
un deuxième renfoncement formé sur une surface de l'élément de surface latérale ; et
une structure annulaire (600) logée dans le deuxième renfoncement et configurée pour empêcher la séparation de la structure de cadre à roue.

15. Dispositif électronique selon la revendication 1, comprenant en outre un ressort de détente (720) et une bille de détente (701).
